# EUROPEAN PATENT SPECIFICATION

(11) **EP 1 497 731 B1**
(45) Date of publication and mention of the grant of the patent: **11.10.2006**
(21) Application number: 03718812.5
(22) Date of filing: 17.04.2003
(51) Int. Cl.: G06F 11/20

(54) **A METHOD AND A SYSTEM FOR ENSURING A BUS AND A CONTROL SERVER**
VERFAHREN UND SYSTEM ZUR SICHERSTELLUNG EINES BUSSES UND EINES STEUERSERVERS
PROCEDE ET SYSTEME PERMETTANT D'ASSURER LE FONCTIONNEMENT D'UN BUS ET D'UN SERVEUR DE COMMANDE

(30) Priority: 22.04.2002 FI 20020774
(43) Date of publication of application: 19.01.2005
(73) Proprietor: Metso Automation Oy, 00880 Helsinki (FI)
(72) Inventor: BORG, Ale, FIN-33520 TAMPERE (FI)
(74) Representative: Grünecker, Kinkeldey, Stockmair & Schwanhäusser Anwaltssozietät
(86) International application number: PCT/FI2003/000310
(87) International publication number: WO 2003/090084

(56) References cited:
- EP-A1- 0 760 503
- WO-A1-98/49621
- DE-C1- 10 030 329
- US-A- 5 142 470
- US-A- 5 148 433
- US-A- 5 185 693
- US-A1- 2001 056 304

## Description

The present invention relates to a method for ensuring the function of a field bus, wherein the field bus is controlled with two control servers, one of which is at a time set active and one is set passive, and the control servers are connected with a backup bus. The invention also relates to a system, which comprises at least one field bus, two control servers for controlling the operation of the field bus, one of which servers is at a time set active and one is set passive, and the control servers are connected with a backup bus. In addition, the invention relates to a control server to be used in the system, which comprises at least one field bus, and which control server comprises means for controlling the operation of the field bus, means for setting the operating state of the control server either active or passive, and means for connecting the control server to another control server with a backup bus.

Different bus structures have been developed for distributed process automation systems, by means of which structures data can be transferred between different parts of the process automation system, such as measurement data from the object being measured to the control room, and control data from the control room to the object being controlled. The process automation system connects to the process via different field buses. With these field buses it is possible to e.g. perform measurements of different points of the process and process control, when necessary.

The field devices communicate with the other parts of the system via a so-called field bus. In connection with process automation systems, a field bus refers to a data transfer bus between the control system and the field devices. It is possible to connect e.g. I/O-modules, field devices and control servers to the field bus. By means of the field bus, the process actuators and the rest of the process automation system can communicate with each other. The field bus is typically arranged as a straight, point-to-point-type of a bus, but also a star form and a circular form are used in some applications. Data transfer is mainly in sequence format and it is usually possible to simultaneously transfer data on the bus to two different directions (Full Duplex). In some bus structures that have been developed, it is possible to transfer the operating voltage required by the interface devices via the same bus, in which case no separate operating voltage lines are required.

One such field bus construction is the so-called PROFIBUS-bus (Process Field Bus). It is based on an open standard, wherein physical characteristics of a field bus are determined, as well as characteristics connected to data transfer, such as the applied protocols. The protocol stack of the PROFIBUS field bus is based on the OSI-model developed by the international standardization system ISO, in which model there are seven different layers and a precise task is defined for each layer. Three of the OSI layers are used in the PROFIBUS field bus: layer 1, i.e. the physical layer; layer 2, i.e. the data link layer; and layer 7, i.e. the application layer.

The physical layer takes care of transferring the bit string along the physical bus cable. The bit timing, data transmission rate and the signal voltage level used in the bus cable in data transfer are determined in the physical layer. The connection of the physical layer complies with the RS-485 standard with an asynchronous NRZ bit coding (Non Return to Zero).

The data link layer takes care of e.g. the bus control with some bus control protocol. The data link layer includes a bus access procedure service (MAC, Medium Access Control), whose task is, among other things, to monitor that only one node at a time has the right to transmit data to the field bus. In addition, the Medium Access Control ensures that each station has enough time to perform its communication tasks within the set time period. In the PROFIBUS field bus the Medium Access Control is divided into two parts: the token ring procedure, which operates e.g. in the mutual communication between server devices (master-master communication) and the master-slave procedure, which operates in the communication between a server device and a field device. In the token passing procedure, such a master device has the bus access right, which has the smallest token of the token message. There is only one active master device at a time in one field bus. In the master-slave procedure that data transfer can begin only by initiation of the master device. Thus the other devices cannot transfer data otherwise than as a result of a request from the master device.

The application layer is responsible for offering management services, data file services and transaction services.

Some tasks of the control server include controlling the operation of the field bus and the field devices connected to it. The control server sends messages to the field devices, by means of which the operating state of the field devices can be controlled, and e.g. data on the process from the field devices can be read, such as measurement data, position data, etc. Via the control server is carried out also the connection of the field bus to the rest of the process automation system, e.g. in order to transmit measurement data to the control room, and the transmission of the control operations performed in the control room to the field devices connected to the field bus. In some applications, a field bus controller (FBC) is formed in connection with the control server, which controller's task is to operate as an interface between the control server and the field bus. Typically the field bus controller is implemented by program preferably in connection with the program server.

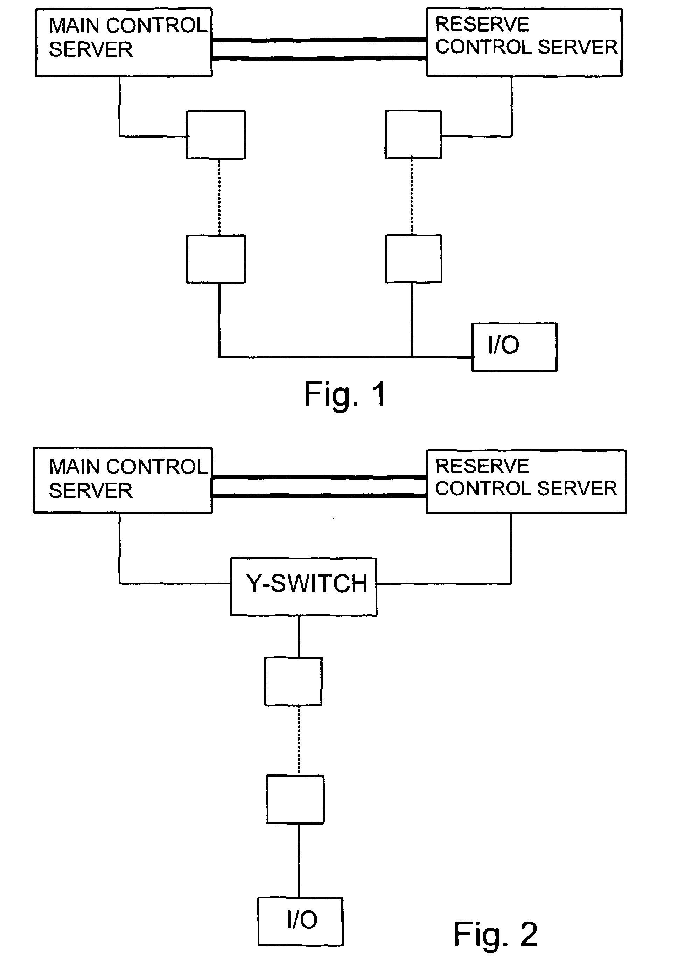

The reliable operation of the process automation system also in different disturbance and fault situations is important. There has been an aim to ensure this by e.g. different duplications, in which case a part of the functional parts of the process automation system is implemented as two substantially identical parts. An example of this type of a partly duplicated system is presented in the appended figure 1. It includes two control servers, where the bus between them is duplicated. One control server is set to operate as the main control server and the other control server is set to operate as a reserve control server. One bus for each field device is formed from each control server. This type of a system is very fault tolerant, but its implementation is expensive, because most of the devices have to be duplicated. In addition, for example, only some of the field devices that can be connected to the PROFIBUS field bus have the possibility to connect the field device to more than one bus. Thus the number of field devices supporting the duplication of the field bus is limited.

Figure 2 shows another redundancy system according to prior art. Also in this system there are two control servers, from each of which departs one bus. These buses are connected to a so-called Y-switch, via which the control servers connect to a non-duplicated field bus. In this type of a system, only the bus between the control servers is duplicated, but the field bus is not. The fault tolerance of this type of a system is considerably inferior to the system shown in figure 1. For example, damaging the Y-switch causes a substantially instant stop of transmission between the field bus and the control server. The system does not detect a break in the bus either, nor other fault situations between the Y-switch and the reserve control server.

In solutions according to prior art, a fault situation in the passive (redundant) part of the system is detected only in a situation, wherein a fault is detected in the active part and the passive part of the system is switched over to active. Thus the operation of the system may be significantly disturbed, because the part of the system that is to be activated (= the passive part) is not necessary in working condition. If the activation is caused by a fault in the active system part, neither part of the system duplication is in working condition. This type of a system malfunction may cause relatively long breaks and it can also cause great costs. Document US5.185.693 discloses an example of suck a system.

It is an aim of the present invention , which is defined by the claims, to provide an improved method and system for ensuring a field bus and a field bus construction. The invention is based on the idea that a check message is sent at intervals from the active control server to the passive server, and a response to the sent check message is waited. If no response is received to the check message within a set time, it is assumed that there is a fault situation in the bus and/or in the passive control server, and information on this situation can be sent to the rest of the process automation system. Also, the passive control server monitors the arrival of check messages and if check messages are not received in the passive control server within a set time, the passive control server concludes that either the active control server and/or the field bus is malfunctioning. In addition, application data is copied from the active control server or an additional check message is sent to the passive control server via some other bus than the field bus. In a fault situation, copying the application data to the passive control server is stopped. The copying of the application data can be used in the passive control server for monitoring the working condition of the control server preferably so that if the passive control server does not within a set time receive new application data from the active control server, it is assumed that there is a fault situation in the active control server. Thus, the passive control server starts procedures for setting the passive control server active, and correspondingly, to set the active control server passive, if possible.

To put it more precisely, the method according to the present invention is mainly characterized in that in the method a first message is sent at intervals from the active control server via said field bus to the passive control server, a response message from the passive control server to said first message is waited at the active control server, in which case if the active control server does not receive said response message within a set time, first data on the fault situation is set, that another message is sent from the active control server via said backup bus to the passive control server, and that the passive control server waits for said second message, in which case if the passive control server does not receive said second message within a set time, another data on the fault situation is set. The system according to the present invention is mainly characterized in that the system comprises means for sending a first message at intervals from the active control server via said field bus to the passive control server, means for forming a response message to said first message at the passive control server, means for clarifying the arrival of the response message at the active control server, means for determining time data on the sending of the latest sent first message, means for comparing said determined time data with a previously set first threshold value, means for setting first data on the fault situation on the basis of the comparison, means for sending a second message at intervals from the active control server via said backup bus to the passive control server, means for clarifying the arrival of the second message at the passive control server, means for determining time data on the receipt of the latest received second message, means for comparing said determined time data with a previously set second threshold value, and means for setting second data on the fault situation on the basis of said comparison. The control server according to the present invention is still mainly characterized in that the control server comprises means for sending a first message at intervals via said field bus to the second control server connected to the field bus, means for clarifying the arrival of a response message to the first message, means for determining time data on the sending of the latest sent first message, means for comparing said determined time data with a previously set first threshold value, and means for setting first data on the fault situation on the basis of said comparison, and means for sending a second message at intervals via said backup bus to said second control server.

The present invention shows remarkable advantages over solutions of prior art. In order to apply the method according to the invention, the field bus and the functional parts connected to it do not need to be duplicated, in which case the total expenses of implementing the system remain smaller than when using the redundancy solutions according to prior art. When using the method according to the invention, it is possible to monitor the operating state of the passive control server, as well as the operating state of the field bus. Thus, substantially instantaneously after detecting a fault situation, it is possible to take measures for repairing the fault without disturbing the rest of the operation of the system. With this type of an arrangement it is possible to mainly prevent the malfunctions and breaks caused by fault situations, which also decreases the expenses caused by fault situations. With a method according to an advantageous embodiment of the invention, it is possible to monitor in the passive control server the operation of the active control server, in which case when a fault situation is detected, the passive control server can be activated and the normal operation of the system can be resumed by using the previously passive control server. This makes it possible to repair the damaged part during the operation of the system. Thus, with the method according to the invention, it is possible to monitor the operating state of a duplicated system and to detect several different fault situations in the field bus and control servers. This increases the reliability of the entire system and makes it possible to react fast to possible fault situations.

In the following, the invention will be described in more detail with reference to the appended drawings, in which
- Fig. 1: shows a field bus redundancy system according to prior art in a reduced block chart,
- Fig. 2: shows another field bus redundancy system according to prior art in a reduced block chart,
- Fig. 3: shows a field bus redundancy system according to a preferred embodiment of the invention in a reduced block chart, and
- Fig. 4: shows a control server according to a preferred embodiment of the invention in a reduced block chart.

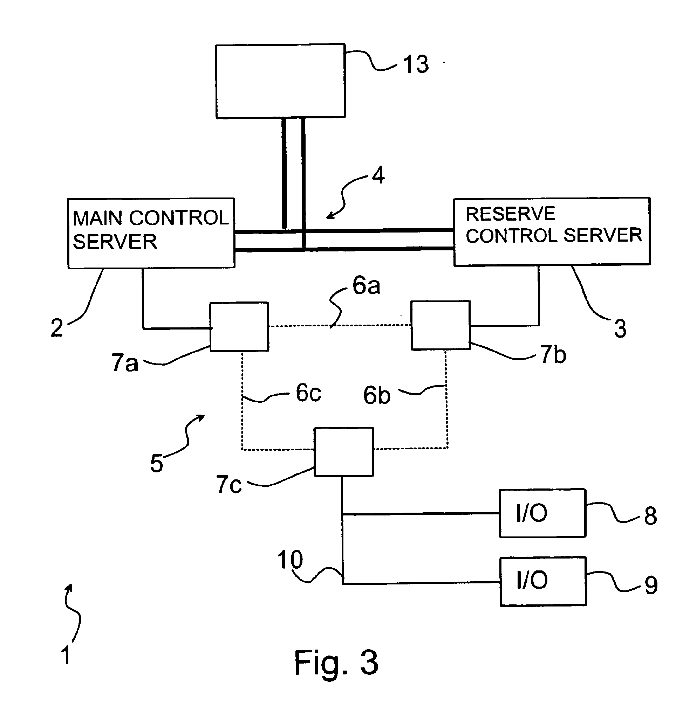

In the following, the invention is described by using a field bus according to the PROFIBUS-specifications as an example, but it will be obvious that the invention is not limited to be used in connection with this type of field buses only. In the system 1 according to an advantageous embodiment of the invention in figure 3, there is a first control server 2 and a second control server 3. These control servers 2, 3 are connected to each other with a backup bus 4, which is advantageously duplicated. The system also comprises a field bus 5, which is advantageously at least partly formed as an optical bus. In the system according to figure 3, this optical bus is divided into segments 6a, 6b, 6c in such a manner that the bus forms into a ring structure. This is provided by connecting together two adjoining segments 6a, 6b; 6b, 6c; 6c, 6a by means of an interface unit 7a, 7b, 7c. This type of an interface unit 7a, 7b, 7c operates as a repeater (hub) in the field bus 5.

It is obvious that in systems in practice the number of interface units 7a, 7b, 7c can also be other than three, typically there are more than three interface units 7a, 7b, 7c.

Each field device 8, 9 is connected together with the interface unit 7a, 7b, 7c via an interface bus 10. Usually it is possible to connect more than one field device 8, 9 to the same interface unit 7a, 7b, 7c, in which case each field device 8, 9 connected to the same interface unit 7a, 7b, 7c is preferably connected to the same interface bus 10.

The first control server 2 is connected to the field bus 5 via the first interface unit 7a. Correspondingly, the second control server 3 is connected to the field bus 5 via the second interface unit 7b. The control servers 2, 3 can thus communicate to the field bus 5 via these corresponding interface units 7a, 7b.

The control server 2, 3 that is at each moment active can communicate with the rest of the process automation system preferably via the backup bus 4. It is, however, obvious that the communication can in systems in practice also be performed via another data transfer bus. In figure 3 said rest of the process automation system is, for clarity, marked only by block 13, but it can as such, as known, comprise several different functional assemblies, as well as field bus systems according to the present invention.

In the following, the operation of the system according to a preferred embodiment of the invention will be described. Let us assume that the first control server 2 is set as the active control server. Because there can only be one active control server at a time in one field bus 5, the other control server 3 is set as the passive control server. This type of a passive control server operates in the system according to the invention like a slave device, in which case a specific slave number is set to it, for example number 1. The first (at this time active) control server 2 sends at intervals a check message via the first interface unit 7a to the field bus 5 to be transmitted to the second (at this time passive) control server 3 via the second interface unit 7b. Thus, the slave number determined for the control server 3 in question is set as recipient information in the message. The message communication is preferably implemented in the second layer of said protocol stack, from which, by means of the message transmission mechanism of the protocol stack, known as such, a message suitable to be sent to the first layer, i.e. the physical transmission channel, is formed. Correspondingly, in the reception of the message the transforming of the message received from the physical transmission channel into a message according to the message structure of the second layer is performed. Preferably said check message does not include information connected to the field devices 8, 9.

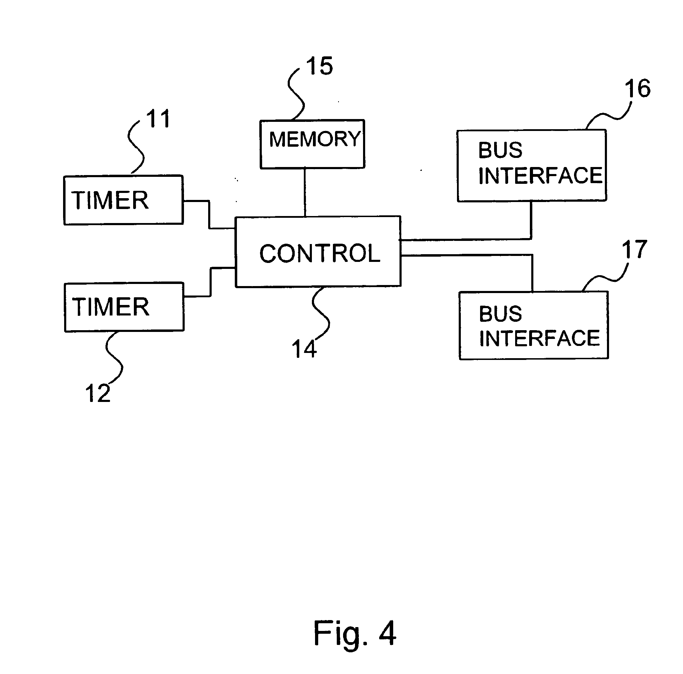

In connection with sending the check message, in the control server 2 a first timer 11 (figure 4) is set to its initial value and is started. This first timer 11 measures time that is elapsed from sending the check message to the arrival of a possible response message. In a situation, wherein the system 1 is in order, the second control server 3 receives the check message. On the basis of this, the second control server 3 concludes that it must send a response message to the first control server 2. The second control server 3 forms a response message, in which the identifier of the first control server 2 is set as recipient information. The second control server 3 sends a response message via the second interface unit 7b to the field bus 5, wherein the response message is transmitted to the first interface unit 7a and further to the first control server 2. The first control server 2 detects the arrival of a response message, in which case the first timer 11 monitoring the time elapsed in receiving the response message can be stopped and set to its initial value again. It is possible to determine when the next check message is sent with, for example, the second timer 12.

In addition to sending the above-described check message, copying application data from the active control server to the passive control server is still performed in the method according to an advantageous embodiment of the invention. In a situation according to the example described above, this means that the application data is copied from the first control server 2 to the second control server 3. The application data describes e.g. the measurement values of different measurements, the control values of actuators, status data, and other information that is connected to the field buses 8, 9 and the status of the controlled process. This application data is transmitted advantageously via the backup bus 4. From the point of view of monitoring the working condition of the active device described hereinbelow, it is substantial, that in the transmission of application data some other bus than the field bus 5 is used.

In a system according to an advantageous embodiment of the invention, it is possible to use the transmission of application data in monitoring the working condition of the active control server 2 preferably in the following manner. The reception of the application data is monitored in the second control server 3, and if no new application data is received within a set time, it is assumed in the second control server 3 that there is a fault situation in the first control server 2 and/or in the backup bus 4. This means that the second control server 3 starts the necessary procedures, with which the second control server 3 is set to operate as an active control server and the first control server 2 is set to operate as passive, if possible. In monitoring the time, it is possible to use, for example, the first timer 11, because in the passive control server 3 there is no need to measure the time elapsing from sending the check message.

The following is a description of some possible fault situations in a system according to figure 3 and the operation of the method according to a preferred embodiment of the invention in this type of a fault situation.

In the first example, it is assumed that the first control server 2 is damaged in such a manner that it no longer sends application data to the second control server 3. As a result of this, the second control server 3 detects, after the predetermined time, that updating the application data has stopped, so therefore the second control server 3 is to be switched over to the active control server. During the switchover of the active control server, the updating of the measurement data is stopped (the measurements are frozen), in which case the latest decent measurement data is used as measurement data, which data the second control server 3 has received from the first control server 2 before it was damaged. If necessary, information on that the measurement data is not updated is sent to the other parts of the process automation system, such as the control room (not shown).

In connection with the activation, the second control server begins to perform control cycles, in which case during the first performance cycle, preferably the latest decent measurement results are used. The second control server 3 begins to send controls via the second interface unit 7b to the field bus 5. If several control tasks are determined in the control cycles, all the control tasks are to be performed at least once before scanning of the field bus is started. In scanning the field bus, the active control server reads information from the field devices preferably by query method (by polling) and sends controls to the field devices.

In the second fault situation example, it is assumed that the bus between the first control server 2 and the first interface unit 7a and/or the first interface unit 7a is damaged. Thus, the check messages from the first control server cannot access the field bus 5. However, copying the application data via the backup bus 4 to the second control server 3 continues. In this situation the second control server 3 detects that check messages have not arrived within a predetermined time. Because, however, the copying of the application data is not interrupted, it is assumed, that there is a malfunction in the field bus interface of the first control server 2. As a result of this, the activation of the second control server 3 is performed and the first control server 2 is set passive. This can be performed advantageously in such a manner that the second control server 3 sends information on switching the active control server via the backup bus 4 to the first control server 2. Thus, the first control server 2 can perform the necessary procedures for setting its working condition as passive. Correspondingly, the second control server 3 performs the above-described procedures to set its working condition active and to continue the operation of the system.

In the third fault situation example, it is assumed that there is some malfunction in the backup bus 4. Thus copying the application data is stopped, but the transmission of check messages continues normally. The second control server 3 can from this situation conclude that there is a malfunction in the backup bus 4. Thus the rest of the operation of the system can continue normally. Information on the fault situation can be sent from the second control server 3 to the first control server 2 either via the field bus 5 or via the possibly flawless bus part of a duplicated backup bus 4. Information on the fault situation is transmitted preferably also to the control room, if possible. Because the backup bus 4 is duplicated, copying the application data can be attempted to continue via the flawless bus part of the backup bus 4.

In the fourth fault situation example, it is assumed that there is a malfunction in some segment (optical fiber) of the field bus 5. The field bus 5 is ring-like, in which case the damaging of one segment does not prevent data transmission in the field bus 5, because all the interface units 7a, 7b, 7c can send information to the field bus into either direction. The interface unit that has detected the damage can transmit information on the fault situation to the first control server 2 in that stage, when a query message to the interface unit 7a, 7b, 7c comes from the first control server 2.

A fault situation, which is important from the point of view of the operation of the method according to the invention, is still the type, wherein either the second control server 3, the second interface unit 7b, and/or the bus between the second control unit 3 and the second interface unit 7b is damaged. Thus, the first control server 2 does not receive response messages to its check messages. Thus, it is possible to conclude in the first control server 2 that the second control server 3 cannot be activated. In this situation, the rest of the operation of the system can continue, but copying the application data is not necessarily continued.

In a method according to an advantageous embodiment of the invention, it is also possible to operate in such a manner that the second control server 3 sends receipt data to the application data it receives. Thus, the first control server 2 can in the above-mentioned fault situation more clearly establish whether the damage is in the second control server 3 or in the field bus interface, i.e. in the second interface card 7b or in the bus between the second interface card 7b and the second control server 3.

If, for example, such an interface unit is damaged, to which a field unit is connected, that type of a fault situation is not processed within the present invention, but other methods are applied to it.

In all the fault situations presented above, the aim is usually to send information to the rest of the system 13, for example to the control room. The information can be transmitted, for example, via the backup bus 4, if it is in working condition.

In an advantageous embodiment of the invention, check messages are sent at intervals of 50 to 500 ms, preferably approximately at intervals of 100 ms. Copying the application data is performed preferably every few seconds, preferably at intervals of 2 to 5 seconds. However, it is obvious that within the scope of the present invention, it is also possible to apply other time intervals than the ones presented above.

Figure 4 still presents a reduced block chart of the structure of a control serves 2, 3 for those parts that are necessary from the point of view of the present invention. The operation of the control server 2, 3 is controlled with a control block 14, which comprises one or more processors or the like. There is also memory 15 in the control server 2, 3 for saving data, program codes of the processor, etc. By means of the first bus interface means 16, it is possible to connect the control server to the interface device 7a, 7b, 7c, and by means of the second bus interface means 17, it is possible to correspondingly connect the control server 2, 3 to the backup bus 4. In the case of the doubled backup bus, the second bus interface means 17 are also doubled. In addition, the control server 2, 3 comprises e.g. timers 11, 12, by means of which the above-described timing functions can be performed.

It is obvious that the present invention is not limited solely to the above-presented embodiments but it can be modified within the scope of the appended claims.

## Claims

1. A method for ensuring the operation of a field bus, wherein the field bus is controlled with two control servers (2, 3), one of which is at a time set active and one is set passive, and the control servers (2, 3) are connected with a backup bus (4),wherein a second message is sent at intervals from the active control server via said backup bus (4) to the passive control server, and the passive control server waits for said second message, in which case if the passive control server does not receive said second message within a first predetermined time, another data on the fault situation is set
**characterized in that** a first message is sent at intervals from the active control server (2, 3) via said field bus to the passive control server (3, 2), a response message from the passive control server (3, 2) to said first message is waited for at the active control server (2, 3), in which case if the active control server does not receive said response message within a second predetermined time, first data on the fault situation is set.

2. The method according to claim 1, **characterized in that** the passive control server waits for said first message, in which case if the passive control server does not receive said first message within a third predetermined time, a third data on the fault situation is set.

3. The method according to claim 2, **characterized in that**
- said first data on the fault situation indicates that the fault situation relates to the passive control server or the interface between the passive control server and the field bus,
- said second data on the fault situation indicates that the fault situation relates to the active control server or said backup bus (4), and
- said third data on the fault situation indicates that the fault situation relates to the active control server or the interface between the active control server and the field bus.

4. The method according to claim 1, 2 or 3, **characterized in that** the passive control server sends a second response message to the second message it has received, in which case the information on the arrival of the second response message is used in the active control server in clarifying a working condition of the passive control server.

5. The method according to claim 1, 2, 3 or 4, wherein field devices (8, 9) are connected to the field bus, **characterized in that** application data is formed, wherein information relating to the different field devices (8, 9) connected to the field bus (5) is determined, and **in that** said application data is sent in said second message to the passive control server.

6. The method according to claim 5, **characterized in that** in a fault situation relating to the operation of the active control server, switching the passive control server over to an active control server is performed, in which case said application data is used in setting the working condition of the control server being switched over to active.

7. The method according to any of the claims 1 to 6, wherein field devices (8, 9) are connected to the field bus, **characterized in that** a check message is used as said first message, which check message appears without information relating to the field devices (8, 9).

8. A system, which comprises at least one field bus (5), two control servers (2, 3) for controlling the operation of the field bus, one of which is at a time set active and one is set passive, in which said control servers (2, 3) are connected with a backup bus, (4), said system further comprising means (17) for sending a second message at intervals from the active control server via said backup bus (4) to the passive control server, means (16) for determining the arrival of the second message at the passive control server (2, 3), means (11) for determining time data on the receipt of the latest received second message, means (14) for comparing said determined time data with a predetermined second threshold value, and means (14) for setting second data on the fault situation on the basis of said comparison
**characterized in that** the system comprises means (16, 7a, 7b) for sending a first message at intervals from the active control server (2, 3) via said field bus (5) to the passive controls server (3, 2), means (14) for forming a response message to said first message at the passive control server (3, 2), means (16) for determining the arrival of the response message at the active control server (2, 3), means (11) for determining time data on sending the latest sent first message, means (14) for comparing said determined time data with a predetermined first threshold value, means (14) for setting first data on the fault situation on the basis of said comparison.

9. The system according to claim 8, **characterized in that**, in addition, the system comprises means (16) for determining the arrival of the first message at the passive control server (3, 2), means (11) for determining time data from the reception of the last received first message, means (14) for comparing said determined time data with a predetermined third threshold value, and means (14) for setting third data on the fault situation on the basis of said comparison.

10. The system according to claim 9, **characterized in that**
- said first data on the fault situation is arranged to indicate a fault situation relating to the passive control server or the interface between the passive control server and the field bus,
- said second data on the fault situation is arranged to indicate a fault situation relating to the active control server or said backup bus (4), and
- said third data on the fault situation is arranged to indicate a fault situation relating to the active control server or the interface between the active control server and the field bus.

11. The system according to claim 8, 9 or 10, **characterized in that** it comprises means (17) for sending by the passive control server a second response message to said second message it has received, in which case the information on the arrival of the response message is arranged to be used in the active control server in determining a working condition of the passive control server.

12. The system according to claim 8, 9, 10 or 11, wherein field devices (8, 9) are connected to the field bus, **characterized in that** in the system application data is formed, relating to the different field devices (8, 9) connected to the field bus (5) and **in that** said application data is arranged to be sent in said second message to the passive control server.

13. The system according to claim 12, **characterized in that** it comprises means for switching the passive control server over to an active control server in a fault situation relating to the operation of the active control server, in which case said application data is arranged to be used in setting a working condition of the control server being changed into active.

14. The system according to any of the claims 8 to 13, **characterized in that** said field bus (5) is formed as a ring bus.

15. The system according to any of the claims 8 to 14, **characterized in that** at least a part of said field bus (5) is formed with an optical fiber.

16. The system according to any of the claims 8 to 15, **characterized in that** said first messages are arranged to be sent advantageously at intervals of 50 to 500 ms, preferably at intervals of approximately 100 ms, and that said second messages are arranged to be sent preferably at intervals of 2 to 5 seconds.

17. The system according to any of the claims 8 to 16, **characterized in that** said field bus is a PROFIBUS field bus.

18. A control server to be used in a system which comprises at least one field bus (5), and which control server (2, 3) comprises means (14, 16) for controlling the operation of the field bus, means (14) for setting a working condition of the control server at a time either active or passive, and means for connecting the control server (2, 3) to another control server via a backup bus (4), and means (17) for sending a second message at intervals via said backup bus (4) to said second control server **characterized in that** the control server comprises means (16, 7a, 7b) for sending a first message at intervals via said field bus (5) to the second control server (3, 2) relating to the field bus, means (16) for determining the arrival of a response message to the first message, means (11) for determining time data on the sending of the latest sent first message, means (14) for comparing said determined time data with a predetermined first threshold value, and means (14) for setting first data on the fault situation on the basis of said comparison.

## Patentansprüche

1. Verfahren zum Gewährleisten der Funktion eines Feldbusses, wobei der Feldbus mit zwei Steuer-Servem (2, 3) gesteuert wird, von denen einer zu einer Zeit aktiv eingestellt ist und einer passiv eingestellt, ist, und die Steuer-Server (2, 3) mit einem Backup-Bus (4) verbunden sind, wobei eine zweite Nachricht in Intervallen von dem aktiven Steuer-Server über den Backup-Bus (4) zu dem passiven Steuer-Server gesendet wird und der passive Steuer-Server auf die zweite Nachricht wartet, wobei in diesem Fall, wenn der passive Server die zweite Nachricht nicht innerhalb einer ersten vorgegebenen Zeit empfängt, andere Daten über die Fehlersituation eingestellt werden,
**dadurch gekennzeichnet, dass**
eine erste Nachricht in Intervallen von dem aktiven Steuer-Server (2, 3) über den Feldbus zu dem passiven Steuer-Server (3, 2) gesendet wird, eine Antwortnachricht von dem passiven Steuer-Server (3, 2) auf die erste Nachricht an dem aktiven Steuer-Server (2, 3) erwartet wird, wobei in diesem Fall, wenn der aktive Steuer-Server die Antwortnachricht nicht innerhalb einer zweiten vorgegebenen Zeit empfängt, erste Daten über die Fehlersituation eingestellt werden.

2. Verfahren nach Anspruch 1, **dadurch gekennzeichnet, dass** der passive Steuer-Server auf die erste Nachricht wartet, wobei in diesem Fall, wenn der passive Steuer-Server die erste Nachricht nicht innerhalb einer dritten vorgegebenen Zeit empfängt, dritte Daten über die Fehlersituation eingestellt werden.

3. Verfahren nach Anspruch 2, **dadurch gekennzeichnet, dass**
die ersten Daten über die Fehlersituation anzeigen, dass sich die Fehlersituation auf den passiven Steuer-Server oder die Schnittstelle zwischen dem passiven Steuer-Server und dem Feldbus bezieht,
die zweiten Daten über die Fehlersituation anzeigen, dass sich die Fehlersituation auf den aktiven Steuer-Server oder den Backup-Bus (4) bezieht, und
die dritten Daten über die Fehlersituation anzeigen, dass sich die Fehlersituation auf den aktiven Steuer-Server oder die Schnittstelle zwischen dem aktiven Steuer-Server und dem Feldbus beziehen.

4. Verfahren nach Anspruch 1, 2 oder 3, **dadurch gekennzeichnet, dass** der passive Steuer-Server eine zweite Antwortnachricht auf die zweite Nachricht sendet, die er empfangen hat, wobei in diesem Fall die Informationen über das Eintreffen der zweiten Antwortnachricht in dem aktiven Steuer-Server verwendet werden, um einen Funktionszustand des passiven Steuer-Servers zu klären.

5. Verfahren nach Anspruch 1, 2, 3 oder 4, wobei Feldvorrichtungen (8, 9) mit dem Feldbus verbunden sind, **dadurch gekennzeichnet, dass** Anwendungsdaten erzeugt werden, wobei Informationen, die sich auf die verschiedenen Feldvorrichtungen (8, 9) beziehen, die mit dem Feldbus (5) verbunden sind, bestimmt werden, und **dadurch**, dass die Anwendungsdaten in der zweiten Nachricht zu dem passiven Steuer-Server gesendet werden.

6. Verfahren nach Anspruch 5, **dadurch gekennzeichnet, dass** in einer Fehlersituation, die sich auf die Funktion des aktiven Steuer-Servers bezieht, das Umschalten des passiven Steuer-Servers zu einem aktiven Steuer-Server durchgeführt wird, wobei in diesem Fall die Anwendungsdaten zum Einstellen des Funktionszustandes des Steuer-Servers verwendet werden, der auf aktiv umgeschaltet wird.

7. Verfahren nach einem der Ansprüche 1 bis 6, wobei Feldvorrichtungen (8, 9) mit dem Feldbus verbunden sind, **dadurch gekennzeichnet, dass** eine Prüfnachricht als die erste Nachricht verwendet wird, wobei die Prüfnachricht ohne Informationen bezüglich der Feldvorrichtungen (8, 9) auftritt.

8. System, das wenigstens einen Feldbus (5), zwei Steuer-Server (2, 3) zum Steuern der Funktion des Feldbusses umfasst, von denen einer jeweils aktiv eingestellt ist, und einer passiv eingestellt ist, wobei die Steuer-Server (2, 3) mit einem Backup-Bus (4) verbunden sind und das System des Weiteren eine Einrichtung (17) zum Senden einer zweiten Nachricht in Intervallen von dem aktiven Steuer-Server über den Backup-Bus (4) zu dem passiven Steuer-Server, eine Einrichtung (16) zum Bestimmen des Eintreffens der zweiten Nachricht an dem passiven Steuer-Server (2, 3), eine Einrichtung (11) zum Bestimmen von Zeitdaten über den Empfang der letzten empfangenen zweiten Nachricht, eine Einrichtung (14) zum Vergleichen der bestimmten Zeitdaten mit einem vorgegebenen zweiten Schwellenwert und Einrichtungen (14) zum Einstellen von zweiten Daten über die Fehlersituation auf Basis des Vergleichs umfasst,
**dadurch gekennzeichnet, dass**
das System eine Einrichtung (16, 7a, 7b) zum Senden einer ersten Nachricht in Intervallen von dem aktiven Steuer-Server (2, 3) über den Feldbus (5) zu dem passiven Steuer-Server (3, 2), eine Einrichtung (14) zum Erzeugen einer Antwortnachricht auf die erste Nachricht an dem passiven Steuer-Server (3, 2), eine Einrichtung (16) zum Bestimmen des Eintreffens der Antwortnachricht an dem aktiven Steuer-Server (2, 3), eine Einrichtung zum Bestimmen von Zeitdaten über das Senden der letzten gesendeten ersten Nachricht, eine Einrichtung (14) zum Vergleichen der bestimmten Zeitdaten mit einem vorgegebenen ersten Schwellenwert, eine Einrichtung (14) zum Einstellen erster Daten über die Fehlersituation auf Basis des Vergleichs umfasst.

9. System nach Anspruch 8, **dadurch gekennzeichnet, dass** das System zusätzlich eine Einrichtung (16) zum Bestimmen des Eintreffens der ersten Nachricht an dem passiven Steuer-Server (3, 2), eine Einrichtung (11) zum Bestimmen von Zeitdaten aus dem Empfang der letzten empfangenen ersten Nachricht, eine Einrichtung (14) zum Vergleichen der bestimmten Zeitdaten mit einem vorgegebenen dritten Schwellenwert und eine Einrichtung (14) zum Einstellen dritter Daten über die Fehlersituation auf Basis des Vergleichs umfasst.

10. System nach Anspruch 9, **dadurch gekennzeichnet, dass**
die ersten Daten über die Fehlersituation so eingerichtet sind, dass sie eine Fehlersituation anzeigen, die sich auf den passiven Steuer-Server oder die Schnittstelle zwischen dem passiven Steuer-Server und dem Feldbus bezieht,
die zweiten Daten über die Fehlersituation so eingerichtet sind, dass sie eine Fehlersituation anzeigen, die sich auf den aktiven Steuer-Server oder den Backup-Bus (4) bezieht, und
die dritten Daten über die Fehlersituation so eingerichtet sind, dass sie eine Fehlersituation anzeigen, die sich auf den aktiven Steuer-Server oder die Schnittstelle zwischen dem aktiven Steuer-Server und dem Feldbus bezieht.

11. System nach Anspruch 8, 9 oder 10, **dadurch gekennzeichnet, dass** sie eine Einrichtung (17) zum Senden einer zweiten Antwortnachricht durch den passiven Steuer-Server auf die zweite Nachricht, die er empfangen hat, umfasst, wobei in diesem Fall die Informationen über das Eintreffen der Antwortnachricht so eingerichtet sind, dass sie in dem aktiven Steuer-Server beim Bestimmen eines Funktionszustandes des passiven Steuer-Servers verwendet werden.

12. System nach Anspruch 8, 9, 10 oder 11, wobei Feldvorrichtungen (8, 9) mit dem Feldbus verbunden sind, **dadurch gekennzeichnet, dass** die System-Anwendungsdaten erzeugt werden, die sich auf die verschiedenen Feldvorrichtungen (8, 9) beziehen, die mit dem Feldbus (5) verbunden sind, und dass die Anwendungsdaten so eingerichtet sind, dass sie in der zweiten Nachricht zu dem passiven Steuer-Server gesendet werden.

13. System nach Anspruch 12, **dadurch gekennzeichnet, dass** es eine Einrichtung zum Umschalten des passiven Steuer-Servers auf einen aktiven Steuer-Server in einer Fehlersituation umfasst, die sich auf die Funktion des aktiven Steuer-Servers bezieht, wobei in diesem Fall die Anwendungsdaten so eingerichtet sind, dass sie beim Einstellen eines Funktionszustandes des Steuer-Servers verwendet werden, der auf aktiv geändert worden ist.

14. System nach einem der Ansprüche 8 bis 13, **dadurch gekennzeichnet, dass** der Feldbus (5) als ein Ringbus ausgebildet ist.

15. System nach einem der Ansprüche 8 bis 14, **dadurch gekennzeichnet, dass** wenigstens ein Teil des Feldbusses (5) mit einer Lichtleitfaser ausgebildet ist.

16. System nach einem der Ansprüche 8 bis 15, **dadurch gekennzeichnet, dass** die ersten Nachrichten so eingerichtet sind, dass sie vorteilhafterweise in Intervallen von 50 bis 500 ms, vorzugsweise in Intervallen von ungefähr 100 ms gesendet werden, und dass die zweiten Nachrichten so eingerichtet sind, dass sie vorzugsweise in Intervallen von 2 bis 5 Sekunden gesendet werden.

17. System nach einem der Ansprüche 8 bis 16, **dadurch gekennzeichnet, dass** der Feldbus ein PROFIBUS-Feldbus ist.

18. Steuer-Server, der in einem System eingesetzt wird, das wenigstens einen Feldbus (5) umfasst, wobei der Steuer-Server (2, 3) eine Einrichtung (14, 16) zum Steuern der Funktion des Feldbusses, eine Einrichtung (14) zum Einstellen eines Funktionszustandes des Steuer-Servers zu einer Zeit auf entweder aktiv oder passiv, und eine Einrichtung zum Verbinden des Steuer-Servers (2, 3) mit einem anderen Steuer-Server über einen Backup-Bus (4) sowie eine Einrichtung (17) zum Senden einer zweiten Nachricht in Intervallen über den Backup-Bus (4) zu dem zweiten Steuer-Server umfasst, **dadurch gekennzeichnet, dass** der Steuer-Server eine Einrichtung (16, 7a, 7b) zum Senden einer ersten Nachricht in Intervallen über den Feldbus (5) zu dem zweiten Steuer-Server (3, 2), die sich auf den Feldbus bezieht, eine Einrichtung (16) zum Bestimmen des Eintreffens einer Antwortnachricht auf die erste Nachricht, eine Einrichtung (11) zum Bestimmen von Zeitdaten über das Senden der letzten gesendeten ersten Nachricht, eine Einrichtung (14) zum Vergleichen der bestimmten Zeitdaten mit einem vorgegebenen ersten Schwellenwert, und eine Einrichtung (14) zum Einstellen erster Daten über die Fehlersituation auf Basis des Vergleichs umfasst.

## Revendications

1. Un procédé pour assurer le fonctionnement d'un bus de terrain, dans lequel le bus de terrain est commandé avec deux serveurs de commande (2, 3) dont un est à un moment donné placé à l'état actif et un est placé à l'état passif, et les serveurs de commande (2, 3) sont connectés à un bus de secours (4), dans lequel un deuxième message est envoyé à Intervalles à partir du serveur de commande actif vers le serveur de commande passif, par l'intermédiaire du bus de secours (4), et le serveur de commande passif attend ledit deuxième message, auquel cas si le serveur de commande passif ne reçoit pas ledit deuxième message au cours d'une première durée prédéterminée, d'autres données concernant la situation de défaut sont fixées,
**caractérisé en ce qu'**un premier message est envoyé à intervalles à partir du serveur de commande actif (2, 3) par l'intermédiaire du bus de terrain vers le serveur de commande passif (3, 2), un message de réponse au premier message, provenant du serveur de commande passif (3, 2), est attendu au serveur de commande actif (2, 3), auquel cas si le serveur de commande actif ne reçoit pas ledit message de réponse au cours d'une deuxième durée prédéterminée, des premières données concernant la situation de défaut sont fixées.

2. Le procédé selon la revendication 1, **caractérisé en ce que** le serveur de commande passif attend ledit premier message, auquel cas si le serveur de commande passif ne reçoit pas ledit premier message au cours d'une troisième durée prédéterminée, des troisièmes données concernant la situation de défaut sont fixées.

3. Le procédé selon la revendication 2, **caractérisé en ce que**
- lesdites premières données concernant la situation de défaut Indiquent que la situation de défaut concerne le serveur de commande passif ou l'interface entre le serveur de commande passif et le bus de terrain,
- lesdites deuxièmes données concernant la situation de défaut Indiquent que la situation de défaut concerne le serveur de commande actif ou le bus de secours (4), et
- lesdites troisièmes données concernant la situation de défaut indiquent que la situation de défaut concerne le serveur de commande actif ou l'interface entre le serveur de commande actif et le bus de terrain.

4. Le procédé selon la revendication 1, 2 ou 3, **caractérisé en ce que** le serveur de commande passif envole un deuxième message de réponse au deuxième message qu'il a reçu, auquel cas l'information concernant l'arrivée du deuxième message de réponse est utilisée dans le serveur de commande actif pour clarifier une condition de fonctionnement du serveur de commande passif.

5. Le procédé selon la revendication 1, 2, 3 ou 4, dans lequel des dispositifs de terrain (8, 9) sont connectés au bus de terrain, **caractérisé en ce qu'**on forme des données d'application, ce qui fait que de l'Information concernant les différents dispositifs de terrain (8, 9) connectés au bus de terrain (5) est déterminée, et **en ce qu'**on envoie lesdites données d'application au serveur de commande passif, dans ledit deuxième message.

6. Le procédé selon la revendication 5, **caractérisé en ce que** dans une situation de défaut concernant le fonctionnement du serveur de commande actif, une commutation du serveur de commande passif pour qu'il devienne un serveur de commande actif est effectuée, auquel cas lesdites données d'application sont utilisées dans la fixation de la condition de fonctionnement du serveur de commande qui est commuté vers l'état actif.

7. Le procédé selon l'une quelconque des revendications 1 à 6, dans lequel des dispositifs de terrain (8, 9) sont connectés au bus de terrain, **caractérisé en ce qu'**un message de contrôle est utilisé pour ledit premier message, ce message de contrôle apparaissant sans information concernant les dispositifs de terrain (8, 9).

8. Un système qui comprend au moins un bus de terrain (5), deux serveurs de commande (2, 3) pour commander le fonctionnement du bus de terrain, dont un est à un moment donné placé à l'état actif et un est placé à l'état passif, et dans lequel lesdits serveurs de commande (2, 3) sont connectés à un bus de secours (4), ce système comprenant en outre un moyen (17) pour envoyer un deuxième message, à intervalles, à partir du serveur de commande actif vers le serveur de commande passif, par l'intermédiaire du bus de secours (4), un moyen (16) pour déterminer l'arrivée du deuxième message au serveur de commande passif (2, 3), un moyen (11) pour déterminer des données de temps à la réception du deuxième message reçu le plus récemment, un moyen (14) pour comparer les données de temps déterminées avec une deuxième valeur de seuil prédéterminée, et un moyen (14) pour fixer des deuxièmes données concernant la situation de défaut sur la base de ladite comparaison,
**caractérisé en ce que** le système comprend un moyen (18, 7a, 7b) pour envoyer un premier message, à intervalles, à partir du serveur de commande actif (2, 3) vers le serveur de commande passif (3, 2), par l'intermédiaire du bus de terrain (5), un moyen (14) pour former un message de réponse audit premier message, au serveur de commande passif (3, 2), un moyen (16) pour déterminer l'arrivée du message de réponse au serveur de commande actif (2, 3), un moyen (11) pour déterminer des données de temps à l'envoi du premier message envoyé le plus récemment. un moyen (14) pour comparer les données de temps déterminées avec une première valeur de seuil prédéterminée, un moyen (14) pour fixer des premières données concernant la situation de défaut, sur la base de ladite comparaison.

9. Le système selon la revendication 8, **caractérisé en ce que**, en plus, le système comprend un moyen (16) pour déterminer l'arrivée du premier message au serveur de commande passif (3, 2), un moyen (11) pour déterminer des données de temps à partir de la réception du premier message reçu le plus récemment, un moyen (14) pour comparer lesdites données de temps déterminées avec une troisième valeur de seuil prédéterminée, et un moyen (14) pour fixer des troisièmes données concernant la situation de défaut, sur la base de ladite comparaison.

10. Le système selon la revendication 9, **caractérisé en ce que**
- les premières données concernant la situation de défaut sont agencées pour indiquer une situation de défaut concernant le serveur de commande passif ou l'interface entre le serveur de commande passif et le bus de terrain,
- les deuxièmes données concernant la situation de défaut sont agencées pour indiquer une situation de défaut concernant le serveur de commande actif ou le bus de secours (4), et
- les troisièmes données concernant la situation de défaut sont agencées pour Indiquer une situation de défaut concernant le serveur de commande actif ou l'interface entre le serveur de commande actif et le bus de terrain.

11. Le système selon la revendication 8, 9 ou 10, **caractérisé en ce qu'**il comprend un moyen (17) pour envoyer par le serveur de commande passif un deuxième message de réponse au deuxième message qu'il a reçu, auquel cas l'information concernant l'arrivée du message de réponse est agencée pour être utilisée dans le serveur de commande actif dans la détermination d'une condition de fonctionnement du serveur de commande passif.

12. Le système selon la revendication 8, 9, 10 ou 11, dans lequel des dispositifs de terrain (8, 9) sont connectés au bus de terrain, **caractérisé en ce que** des données d'application, concernant les différents dispositifs de terrain (8, 9) connectés au bus de terrain (5), sont formées dans la système, et **en ce que** lesdites données d'application sont agencées pour être envoyées dans la deuxième message au serveur de commande passif.

13. Le système selon la revendication 12, **caractérisé en ce qu'**il comprend un moyen pour commuter le serveur de commande passif pour qu'il devienne un serveur de commande actif dans une situation de défaut concernant le fonctionnement du serveur de commande actif, auquel cas lesdites données d'application sont agencées pour être utilisées dans la fixation d'une condition de fonctionnement du serveur de commande qui est commuté vers l'état actif.

14. Le système selon l'une quelconque des revendications 8 à 13, **caractérisé en ce que** le bus de terrain (5) est formé comme un bus en anneau.

15. Le système selon l'une quelconque des revendications 8 à 14, **caractérisé en ce qu'**au moins une partie du bus de terrain (5) est formée avec une fibre optique.

16. Le système selon l'une quelconque des revendications 8 à 15, **caractérisé en ce que** lesdits premiers messages sont agencée pour être envoyés avantageusement à des intervalles de 50 à 500 ms, de préférence à des intervalles d'environ 100 ms, et **en ce que** lesdits deuxièmes messages sont agencés pour être envoyés de préférence à des intervalles de 2 à 5 secondes.

17. Le système selon l'une quelconque des revendications 8 à 16, **caractérisé en ce que** le bus de terrain est un bus de terrain PROFIBUS.

18. Un serveur de commande destiné à être utilisé dans un système qui comprend au moins un bus de terrain (5), ce serveur de commande (2, 3) comprenant un moyen (14, 16) pour commander le fonctionnement du bus de terrain, un moyen (14) pour fixer une condition de fonctionnement du serveur de commande à un état actif ou passif à un moment donné, et un moyen pour connecter le serveur de commande (2, 3) à un autre serveur de commande par l'intermédiaire d'un bus de secours (4), et un moyen (17) pour envoyer, à intervalles, un deuxième message vers le deuxième serveur de commande, par l'intermédiaire du bus de secours (4),
**caractérisé en ce que** le serveur de commande comprend un moyen (16, 7a, 7b) pour envoyer, à Intervalles, au deuxième serveur de commande (3, 2), par l'intermédiaire du bus de terrain (5), un premier message concernant le bus de terrain, un moyen (16) pour déterminer l'arrivée d'un message de réponse au premier message, un moyen (11) pour déterminer des données de temps à l'envoi du premier message envoyé le plus récemment, un moyen (14) pour comparer les données de temps déterminées avec une première valeur de seuil prédéterminée, et un moyen (14) pour fixer des premières données concernant la situation de défaut sur la base de ladite comparaison.
